# FASCICULE DE BREVET EUROPEEN

(11) **EP 1 541 254 B1**
(45) Date de publication et mention de la délivrance du brevet: **06.09.2006**
(21) Numéro de dépôt: 04028889.6
(22) Date de dépôt: 07.12.2004
(51) Int. Cl.: B21D 13/02, F16J 15/08, F16J 15/12

(54) **Procédé d'obtention d'une surépaisseur au niveau d'une tôle et joint comprenant ladite tôle**
Verfahren zum Herstellen eines Bleches mit vergrösserter Wanddicke sowie Dichtung aus einem solchen Blech
Method for producing an increased thickness in a metal sheet and gasket comprising said metal sheet

(30) Priorité: 10.12.2003 FR 0351021
(43) Date de publication de la demande: 15.06.2005
(73) Titulaire: Carl Freudenberg KG, 69469 Weinheim (DE)
(72) Inventeur: Ulmer, Georges, 87000 Limoges (FR)

(56) Documents cités:
- EP-A- 0 702 174
- FR-A- 2 681 378
- US-A- 1 006 600
- US-A- 2 969 586
- US-A- 2 992 151
- US-A- 5 439 234

## Description

La présente invention se rapporte à un procédé d'obtention d'une surépaisseur au niveau d'une tôle, à la tôle ainsi obtenue, ainsi qu'à un joint, notamment un joint de culasse, comprenant ladite tôle.

Un joint de culasse est utilisé pour assurer l'étanchéité entre un bloc moteur et une culasse. Un joint de culasse a généralement la forme du bloc moteur, notamment rectangulaire, et comprend une pluralité d'ouvertures, permettant d'assurer la continuité entre des cavités ou des conduits disposés d'une part dans le bloc moteur, et d'autre part dans la culasse. Le joint de culasse doit assurer une bonne étanchéité entre les conduits entre eux et entre les conduits et l'extérieur malgré les défauts géométriques des surfaces en contact du bloc moteur et de la culasse et les variations de température.

Un joint de culasse comprend généralement plusieurs feuilles ou tôles empilées, notamment deux tôles extérieures actives entre lesquelles est disposée une tôle intercalaire. Au moins l'une des tôles extérieures comporte une nervure autour des ouvertures susceptibles de coïncider avec les chambres de combustion, à proximité desdites ouvertures, orientée vers l'intérieur du joint, afin d'obtenir une zone déformable permettant de compenser les déformations du joint. Ainsi, lorsque des nervures sont prévues sur les deux tôles extérieures, les parties en saillie desdites nervures sont disposées en vis à vis et orientées l'une vers l'autre ou en opposition.

Par ailleurs, le joint de culasse peut comprendre une tôle ayant au moins une zone de surépaisseur, notamment pour améliorer l'étanchéité.

A titre d'exemple, ledit joint comprend au moins une tôle avec une zone de surépaisseur en périphérie des ouvertures prévues pour les chambres de combustion.

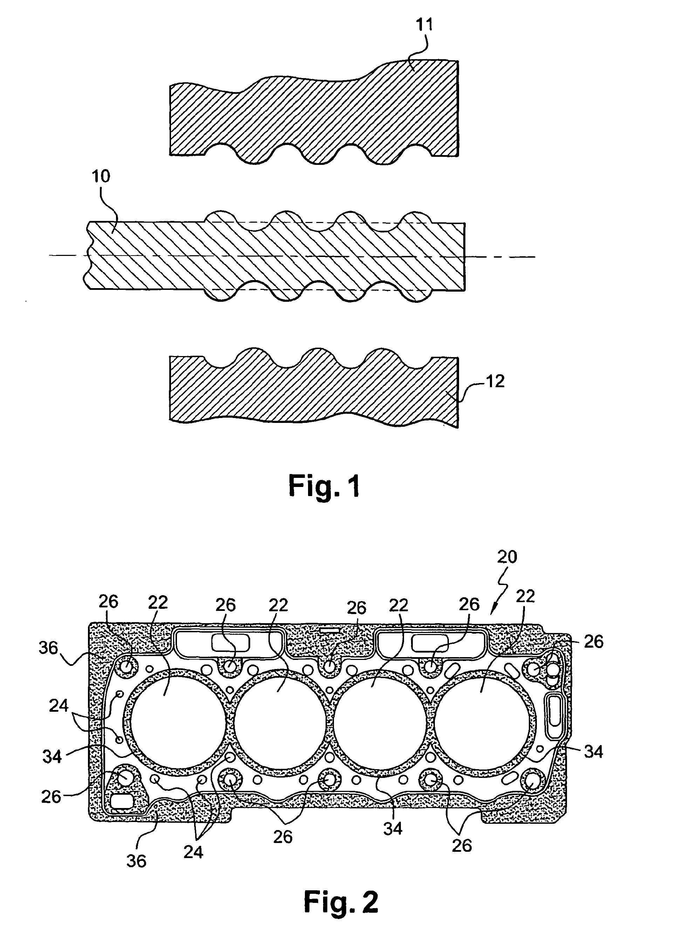

Selon l'art antérieur, ces zones de surépaisseur sont obtenues par déformation plastique notamment par matriçage entre deux matrices. Sur la figure 1, on a représenté une zone de surépaisseur réalisée sur une tôle 10 par pressage entre deux matrices 11 et 12. Selon ce mode de réalisation, on note que la forme de la tôle est imposée par les formes des matrices et que l'expansion de la matière est contrôlée, ladite matière fluant depuis les zones comprimées entre les matrices vers les zones en creux des matrices. Le fluage de la matière induit des efforts de frottement considérables le long des faces des matrices si bien que la pression de serrage des matrices est relativement importante. Par conséquent, cette opération de matriçage requiert une presse de forte puissance, encombrante et coûteuse.

Aussi, la présente invention vise à pallier les inconvénients de l'art antérieur en proposant un nouveau procédé d'obtention d'une surépaisseur au niveau d'une tôle susceptible d'être incorporée dans un joint, notamment un joint de culasse.

A cet effet, l'invention a pour objet un procédé d'obtention d'une surépaisseur au niveau de la face d'une tôle susceptible d'être incorporée dans un joint, caractérisé en ce qu'il consiste à réaliser au moins une marque en creux sur la face au niveau de laquelle on souhaite obtenir la surépaisseur, à l'aide d'un outil pointu ou tranchant appelé par la suite poinçon, l'enfoncement dudit poinçon provoquant une expansion de matière non contrôlée, appelée renflement, à proximité de la marque en creux, susceptible de former une surépaisseur.

La présente invention a aussi pour object une tôle obtenue par le procédé de l'invention et un joint comprenant au moins ladite tôle, avec les caractéristiques des revendications 6 et 10 respectivement.

D'autres caractéristiques et avantages ressortiront de la description qui va suivre de l'invention, description donnée à titre d'exemple uniquement, en regard des dessins annexés sur lesquels:
- la figure 1 est une coupe illustrant le mode de réalisation d'une surépaisseur sur une tôle selon l'art antérieur,
- la figure 2 est une vue de dessus d'un joint de culasse illustrant les zones de surépaisseur envisageables,
- la figure 3 est une coupe transversale d'un joint de culasse illustrant des zones de surépaisseur au niveau d'une tôle intercalaire,
- les figures 4A et 4B sont des vues en perspective d'outils susceptibles d'être utilisés pour marquer la pièce,
- la figure 5 est une coupe illustrant en détail l'opération de marquage permettant de créer une surépaisseur,
- la figure 6 est une vue en coupe d'une tôle après une opération de marquage,
- la figure 7 est une vue en coupe d'une tôle après une opération de calibrage, et
- les figures 8A et 8B sont des vues de dessus de zones de surépaisseur avec différentes densités.

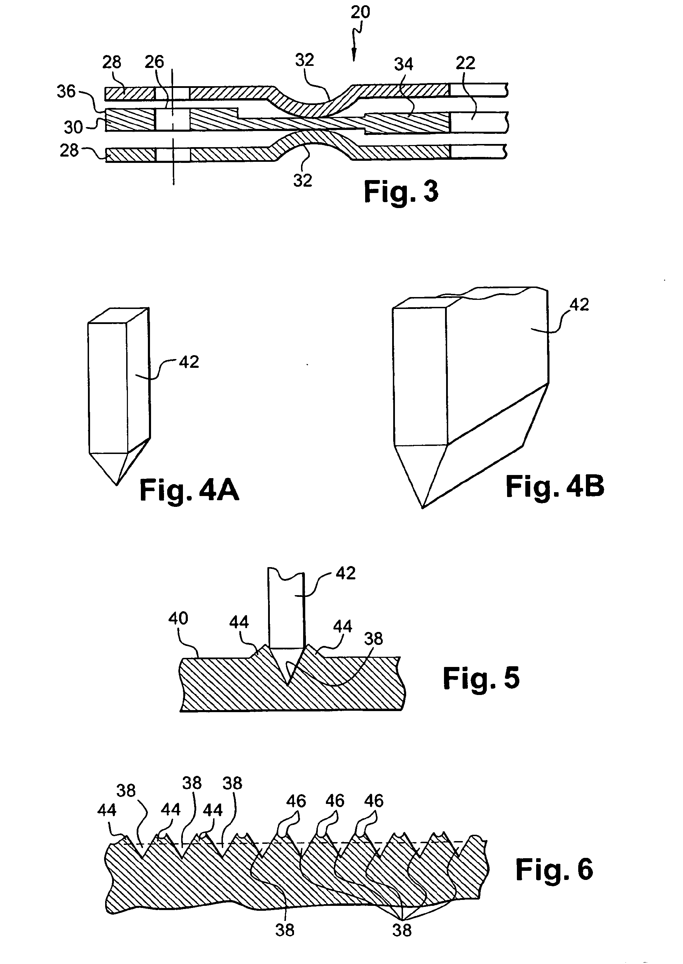

Sur les figures 2 et 3, on a représenté un joint de culasse 20 comprenant plusieurs feuilles ou tôles empilées, susceptible d'être interposé entre un bloc moteur et une culasse.

De manière connue, un joint de culasse comprend une pluralité d'ouvertures permettant d'assurer la continuité entre des cavités ou des conduits ménagés dans ledit bloc moteur et ladite culasse.

Ainsi, il comprend des premières ouvertures 22 susceptibles de coopérer avec des chambres à combustion, des deuxièmes ouvertures 24 pour les conduits du ou des fluides de refroidissement et des troisièmes ouvertures 26 pour permettre le passage d'éléments de fixation de la culasse sur le bloc moteur, notamment des tiges filetées.

Le joint de culasse comprend également au moins une tôle extérieure active 28, et de préférence deux entre lesquelles est disposée une tôle intercalaire 30. Au moins l'une des tôles extérieures comporte une nervure 32 autour des premières ouvertures, à proximité desdites ouvertures, orientée vers l'intérieur du joint, afin d'obtenir une zone déformable permettant de compenser les déformations du joint.

Pour améliorer l'étanchéité, le joint comprend sur au moins une des tôles, notamment au niveau de la tôle intercalaire 30, au moins une zone de surépaisseur, notamment une surépaisseur appelée stoppeur 34, disposée en périphérie des ouvertures susceptibles de coïncider avec les chambres de combustion. Comme illustré sur la figure 3, la tôle intercalaire 30 peut comprendre au moins une zone de surépaisseur 36 disposée à l'extérieur des nervures 32. Sur la figure 2, on a représenté en noir les zones dans lesquelles peuvent être avantageusement prévues des surépaisseurs.

Selon les cas, une surépaisseur peut être prévue sur chacune des faces de la tôle, comme illustré pour le stoppeur 34, ou seulement sur l'une des faces comme illustré pour la surépaisseur 36.

Selon l'invention, pour réaliser une surépaisseur sur une face, on réalise au moins une marque en creux 38 sur la face 40 au niveau de laquelle on souhaite obtenir la surépaisseur, à l'aide d'un outil 42 pointu ou tranchant appelé par la suite poinçon, l'enfoncement dudit poinçon 42 provoquant une expansion de matière 44 non contrôlée, appelée renflement, à proximité de la marque en creux 38, susceptible de former une surépaisseur.

Par poinçon, on entend tout outil qui comprend à son extrémité au moins une pointe, comme illustrée sur la figure 4A, ou au moins une arête tranchante, rectiligne ou non, comme illustrée sur la figure 4B, permettant d'obtenir avec un effort relativement faible une marque sur une surface. Pour augmenter la cadence de réalisation des marques en creux 38, on pourrait utiliser un poinçon avec plusieurs pointes ou arêtes.

Selon l'invention, la déformation plastique produite par le marquage provoque une expansion de matière non contrôlée, le renflement 44 n'étant pas comprimé dans une forme en creux d'une matrice. Ainsi, les efforts nécessaires pour produire cette surépaisseur sont bien moins importants que ceux des techniques de l'art antérieur.

Avantageusement, comme illustré sur la figure 6, la zone de surépaisseur comprend une pluralité de marques en creux 38. Selon les cas, les marques 38 peuvent être réalisées les unes à la suite des autres ou groupe par groupe.

Ainsi, à quantité de matière en surépaisseur égale, l'appareillage nécessaire pour obtenir la surépaisseur selon l'invention est beaucoup moins puissant, notamment du fait que la surépaisseur est obtenue par une pluralité de marques en creux.

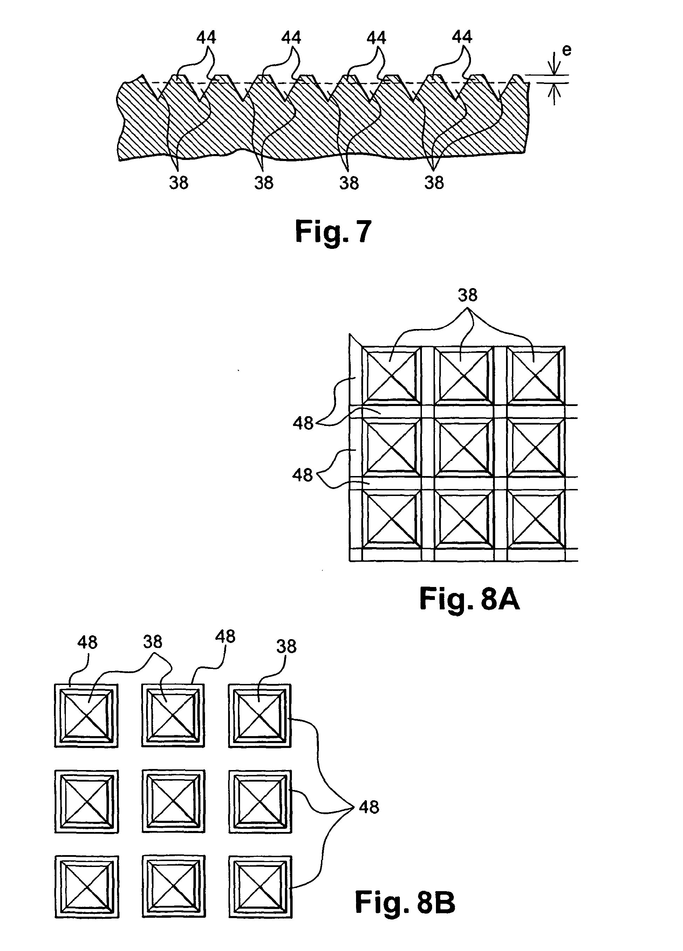

Comme illustré sur la figure 6, les renflements peuvent comprendre des crêtes 46 n'ayant pas toutes la même hauteur. Avantageusement, comme illustré sur la figure 7, les renflements 44 peuvent être calibrés de manière à obtenir une surépaisseur e régulière. Cette opération de calibrage peut être obtenue par planage.

Lors de cette opération de calibrage, on obtient également un écrouissage des renflements qui leur confère une résistance à la déformation plus importante que celle des crêtes 46.

Comme illustré sur les figures 8A et 8B, on obtient autour des marques en creux 38 un renflement de la matière qui forme une barrière 48 autour des marques en creux. En fonction de la densité des marques en creux 38, on peut obtenir un réseau de barrières 48 jointives comme illustré sur la figure 8A ou un réseau de barrières 48 disjointes comme illustré par la figure 8B. Ainsi, la capacité d'étanchéité de la surépaisseur est sensiblement proportionnelle à la densité des marques en creux 38.

Selon une autre caractéristique préférée de l'invention, la résistance à l'écrasement de la zone de surépaisseur est proportionnelle à la densité des marques en creux.

Par résistance à l'ecrasement, on entend la capacité d'un élément à s'opposer à la variation de son épaisseur lorsqu'il est soumis notamment à un effort de compression, l'épaisseur correspondant à la valeur dimensionnelle orientée selon l'effort de compression.

Pour obtenir une surépaisseur sur les deux faces d'une tôle, le procédé de l'invention est mis en oeuvre sur chacune des deux faces.

Selon une autre caractéristique préférée de l'invention, la hauteur de la surépaisseur est ajustée en fonction de la profondeur d'enfoncement du poinçon et/ou de la densité des marques en creux.

Bien entendu, l'invention n'est évidemment pas limitée au mode de réalisation représenté et décrit ci-dessus, mais en couvre au contraire toutes les variantes couvertes par les revendications, notamment en ce qui concerne les formes, dimensions et matériaux des différents éléments. Ainsi, le poinçon utilisé pour marquer la pièce peut ne pas être pointu mais présenter une extrémité en forme de lame comme illustrée sur la figure 4B, ladite lame étant rectiligne, courbe, en arc de cercle ou circulaire.

Enfin, cette tôle à surépaisseur localisée n'est pas limitée à l'application décrite et peut convenir à tous les types de joints métalliques nécessitant une surépaisseur au niveau d'une tôle.

## Revendications

1. Procédé d'obtention d'une surépaisseur au niveau de la face d'une tôle susceptible d'être incorporée dans un joint, **caractérisé en ce qu**'il consiste à réaliser au moins une marque en creux (38) sur la face (40) au niveau de laquelle on souhaite obtenir la surépaisseur, à l'aide d'un outil (42) pointu ou tranchant appelé par la suite poinçon, l'enfoncement dudit poinçon (42) provoquant une expansion de matière (44) non contrôlée, appelée renflement, à proximité de la marque en creux (38), susceptible de former une surépaisseur.

2. Procédé selon la revendication 1, **caractérisé en ce qu**'on réalise une pluralité de marques en creux (38).

3. Procédé selon la revendication 1 ou 2, **caractérisé en ce que** les renflements (44) sont calibrés de manière à obtenir une surépaisseur e régulière.

4. Procédé selon l'une quelconque des revendications 1 à 3, **caractérisé en ce que** la densité des marques en creux (38) est ajustée en fonction de la capacité d'étanchéité et/ou de la résistance à l'écrasement souhaitée(s).

5. Procédé selon l'une quelconque des revendications 1 à 4, **caractérisé en ce que** la hauteur de la surépaisseur est ajustée en fonction de la profondeur d'enfoncement du poinçon et/ou de la densité des marques en creux.

6. Tôle susceptible d'être incorporée dans un joint comprenant sur au moins l'une de ses faces au moins une zone de surépaisseur obtenue à partir du procédé selon l'une quelconque des revendications 1 à 5, **caractérisée en ce qu**'elle comprend au moins une marque en creux (38) avec un renflement (44) obtenu par une expansion de matière non contrôlée et susceptible de former une surépaisseur.

7. Tôle selon la revendication 6, **caractérisée en ce qu**'elle comprend une pluralité de marques en creux (38) avec en périphérie des renflements (44).

8. Tôle selon la revendication 7, **caractérisée en ce que** les renflements (44) sont calibrés.

9. Tôle selon la revendication 7 ou 8, **caractérisée en ce que** les renflements forment un réseau de barrières (48) jointives.

10. Joint comprenant au moins une tôle selon l'une quelconque des revendications 6 à 9, comprenant au moins une zone de surépaisseur obtenue à partir du procédé selon l'une quelconque des revendications 1 à 5.

## Claims

1. Method for producing an increased thickness in the face of a metal sheet capable of being incorporated into a gasket, **characterized in that** it consists in making at least one indented mark (38) in the face (40) in which the increased thickness is to be produced, using a pointed or edged tool (42) hereinafter referred to as the punch, the pressure of the said punch (42) causing an uncontrolled expansion of material (44), termed the relief, near to the indented mark (38) such as to form an increased thickness.

2. Method according to Claim 1, **characterized in that** a plurality of indented marks (38) are made.

3. Method according to Claim 1 or 2, **characterized in that** the reliefs (44) are calibrated to produce a regular increased thickness e.

4. Method according to any one of Claims 1 to 3, **characterized in that** the density of the indented marks (38) is adjusted to suit the desired degree of leaktightness and/or crush resistance.

5. Method according to any one of Claims 1 to 4, **characterized in that** the height of the increased thickness is adjusted as a function of the depth to which the punch is driven and/or as a function of the density of the indented marks.

6. Metal sheet capable of being incorporated into a gasket comprising on at least one of its faces at least one area of increased thickness produced with the aid of the method according to any one of Claims 1 to 5, **characterized in that** it includes at least one indented mark (38) with a relief (44) produced by an uncontrolled expansion of material such as to form an increased thickness.

7. Metal sheet according to Claim 6, **characterized in that** it includes a plurality of indented marks (38) with reliefs (44) around them.

8. Metal sheet according to Claim 7, **characterized in that** the reliefs (44) are calibrated.

9. Metal sheet according to Claim 7 or 8, **characterized in that** the reliefs form a network of adjoining barriers (48).

10. Gasket comprising at least one metal sheet according to Claims 6 to 9, comprising at least one area of increased thickness produced with the aid of the method according to any one of Claims 1 to 5.

## Patentansprüche

1. Verfahren zur Herstellung einer Überdicke im Bereich der Vorderseite eines Blechs, das in eine Fuge eingefügt werden kann, **dadurch gekennzeichnet, dass** es darin besteht, mindestens eine Hohlmarke (38) auf der Vorderseite (40), in deren Bereich die Überdicke erzielt werden soll, mit Hilfe eines spitzen oder scharfen Werkzeugs (42), in der Folge Stempel genannt, herzustellen, wobei das Eintreiben des Stempels (42) eine unkontrollierte Materialausdehnung (44), Wulst genannt, in der Nähe der Hohlmarke (38) hervorruft, die eine Überdicke bilden kann.

2. Verfahren nach Anspruch 1, **dadurch gekennzeichnet, dass** eine Vielzahl von Hohlmarken (38) hergestellt wird.

3. Verfahren nach Anspruch 1 oder 2, **dadurch gekennzeichnet, dass** die Wülste (44) derart kalibriert sind, dass eine Überdicke e erzielt wird.

4. Verfahren nach einem der Ansprüche 1 bis 3, **dadurch gekennzeichnet, dass** die Dichte der Hohlmarken (38) in Abhängigkeit von der gewünschten Fähigkeit der Abdichtung und/oder der Druckfestigkeit angepasst wird.

5. Verfahren nach einem der Ansprüche 1 bis 4, **dadurch gekennzeichnet, dass** die Höhe der Überdicke in Abhängigkeit von der Eindringtiefe des Stempels und/oder der Dichte der Hohlmarken angepasst wird.

6. Blech, das in eine Fuge eingefügt werden kann, umfassend auf mindestens einer seiner Seiten mindestens eine Zone mit Überdicke, die durch das Verfahren nach einem der Ansprüche 1 bis 5 hergestellt wird, **dadurch gekennzeichnet, dass** es mindestens eine Hohlmarke (38) mit einem Wulst (44) umfasst, der duch eine unkontrollierte Materialausdehnung erhalten wird und eine Überdicke bilden kann.

7. Blech nach Anspruch 6, **dadurch gekennzeichnet, dass** es eine Vielzahl von Hohlmarken (38) mit Wülsten (44) an der Peripherie umfasst.

8. Blech nach Anspruch 7, **dadurch gekennzeichnet, dass** die Wülste (44) kalibriert sind.

9. Blech nach Anspruch 7 oder 8, **dadurch gekennzeichnet, dass** die Wülste ein Netz von aneinander grenzenden Schranken (48) bilden.

10. Fuge, umfassend mindestens ein Blech nach einem der Ansprüche 6 bis 9, umfassend mindestens eine Überdicke, die durch ein Verfahren nach einem der Ansprüche 1 bis 5 erhalten wird.
